# EUROPEAN PATENT APPLICATION

(11) **EP 2 477 071 A1**
(43) Date of publication of application: **18.07.2012**
(21) Application number: 11275155.7
(22) Date of filing: 06.12.2011
(51) Int. Cl.: G03B 35/00, H04N 13/02, H04N 5/225

(54) **Camera module and method of manufacturing the same**

(30) Priority: 14.01.2011 KR 20110003945
(71) Applicant: Samsung Electro-Mechanics Co., Ltd, Suwon, Gyunggi-Do (KR)
(72) Inventor: Han,, Joon Hyuk, Gyunggi-do (KR); Seo,, Dong Hyun, Gyunggi-do (KR)
(74) Representative: Powell, Timothy John

(57) **Abstract**

There are provided a camera module and a method of manufacturing the same. The camera module according to embodiments of the present invention includes: a lens assembly including at least one lens element layer and two lenses integrally formed on each lens element layer, the two lenses having the same focal distance and different optical axes; an image sensor package receiving light incident through the lens assembly and having two image sensor chips disposed therein, the two image sensor chips corresponding to the respective two lenses; and a housing receiving the lens assembly and the image sensor package therein.

## Description

### CROSS-REFERENCE TO RELATED APPLICATIONS

This application claims the priority of Korean Patent Application No. 10-2011-0003945 filed on January 14, 2011, in the Korean Intellectual Property Office, the disclosure of which is incorporated herein by reference.

### BACKGROUND OF THE INVENTION

### Field of the Invention

The present invention relates to a camera module and a method of manufacturing the same, and more particularly, to a camera module and a method of manufacturing the same, capable of simplifying an optical-axis adjustment and module alignment, in manufacturing a camera module for capturing a three-dimensional image.

### Description of the Related Art

Generally, a camera module for capturing a three-dimensional image has a structure in which two structures, including lenses stacked along an optical axis and image sensors, are arranged on a three-dimensional wiring board to be spaced apart by a predetermined distance.

In manufacturing the 3D camera module, a process of aligning the two structures, including the lenses and the image sensors, may be required. The alignment process is performed through the viewing of a screen, which has resulted in a large production loss. Further, there are limitations in accurately adjusting an interval between the two lenses or between the image sensors, due to errors during the alignment process.

In addition, the alignment process may increase irregularity in the optical-axis direction during manufacturing and an accurate three-dimensional image may not be obtained.

### SUMMARY OF THE INVENTION

An aspect of the present invention provides a camera module and a method of manufacturing the same, capable of improving and simplifying precision of optical-axis adjustment and module alignment in manufacturing a camera module for capturing a three-dimensional image.

According to an aspect of the present invention, there is provided a camera module, including: a lens assembly including at least one lens element layer and two lenses integrally formed on each lens element layer, the two lenses having the same focal distance and different optical axes; an image sensor package receiving light incident through the lens assembly and having two image sensor chips disposed therein, the two image sensor chips corresponding to the respective two lenses; and a housing receiving the lens assembly and the image sensor package therein.

The two image sensor chips may be integrally formed.

Each lens element layer may be formed by two lenses adjacent to each other on a lens wafer manufactured at a wafer level.

A distance between image sensors of the two image sensor chips may be adjusted according to a distance between optical axes of the two lenses.

The image sensor package may include a cover glass covering the two image sensor chips.

According to another aspect of the present invention, there is provided a camera module, including: a lens assembly including two lens groups having the same focal distance and different optical axes, each lens group having at least one lens stacked along the optical axis thereof; an image sensor package receiving light incident through the lens assembly and having two image sensor chips integrally formed therein, the two image sensor chips corresponding to the respective two lens groups; and a housing receiving the lens assembly and the image sensor package therein.

According to another aspect of the present invention, there is provided a method of manufacturing a camera module, including: preparing at least one lens wafer on which a plurality of lens pairs are arranged, each lens pair including two lenses having the same focal distance and optical axes spaced apart from each other by a predetermined distance; stacking the at least one lens wafer along the optical axes; cutting the at least one lens wafer into units of lens pairs to manufacture a lens assembly; preparing an image sensor package receiving light incident through the two lenses and having a pair of image sensor chips disposed therein, the pair of image sensor chips corresponding to the respective two lenses; and inserting the lens assembly and the image sensor package into a housing.

The preparing of the image sensor package may include manufacturing an image sensor wafer on which the pair of image sensor chips are arranged in plural and cutting the image sensor wafer into a unit of the pair of image sensors.

The preparing of the image sensor package may be performed by adjusting a distance between image sensors of the pair of image sensor chips, according to a distance between the optical axes of the lens pair.

The preparing of the image sensor package may include stacking a cover glass wafer on the pair of image sensor chips so as to cover the pair of image sensor chips.

According to another aspect of the present invention, there is provided a method of manufacturing a camera module, including: preparing a lens assembly including two lens groups having the same focal distance and different optical axes, each lens group having at least one lens stacked along the optical axis thereof; preparing an image sensor wafer receiving light incident from the lens assembly and having a plurality of pairs of image sensor chips disposed therein, each pair of the image sensor chips corresponding to the respective two lens groups; cutting the image sensor wafer into units of pairs of image sensor chips to manufacture an image sensor package; and inserting the lens assembly and the image sensor package into a housing.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a cross-sectional view showing a schematic configuration of a camera module according to a first embodiment of the present invention;
FIG. 2 is a perspective view of a lens assembly in the camera module according to the first embodiment of the present invention;
FIG. 3 is a perspective view of an image sensor package in the camera module according to the first embodiment of the present invention;
FIG. 4 is a cross-sectional view showing a schematic configuration of a camera module according to a second embodiment of the present invention;
FIG. 5 is a cross-sectional view showing a schematic configuration of a camera module according to a third embodiment of the present invention;
FIG. 6 is a diagram showing a process of manufacturing the lens assembly in the camera module according to the first embodiment of the present invention; and
FIG. 7 is a diagram showing a process of manufacturing the image sensor package in the camera module according to the first embodiment of the present invention.

### DETAILED DESCRIPTION OF THE PREFERRED EMBODIMENT

Exemplary embodiments of the present invention will now be described in detail with reference to the accompanying drawings. However, it should be noted that the spirit of the present invention is not limited to the exemplary embodiments set forth herein and those skilled in the art and understanding the present invention can easily accomplish retrogressive inventions or other exemplary embodiments included in the spirit of the present invention by the addition, modification, and removal of components within the same spirit, but those are construed as being included in the spirit of the present invention.

In addition, components having like functions are denoted by like reference numerals throughout the drawings of each exemplary embodiment.

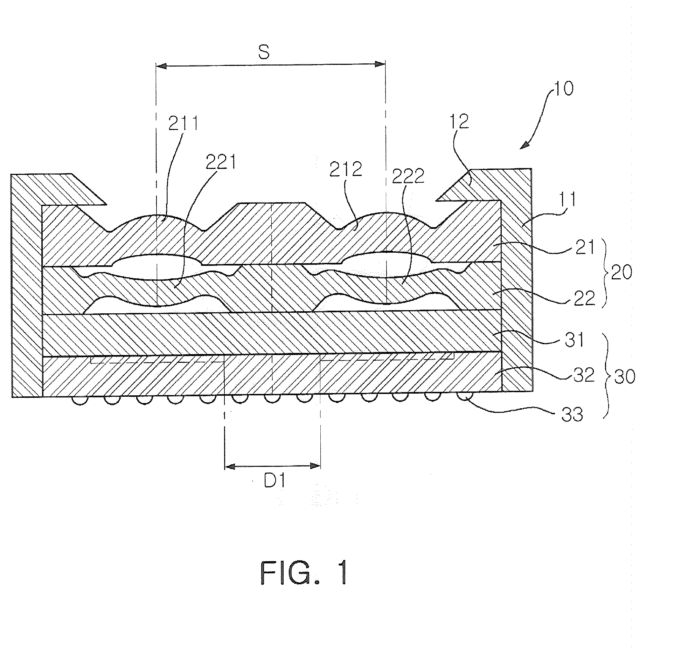

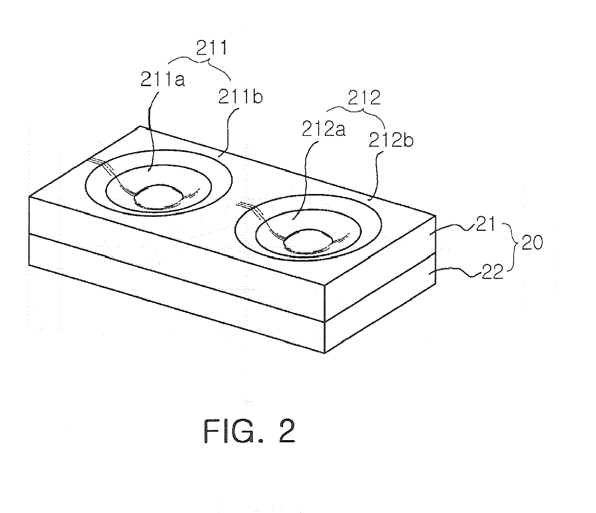

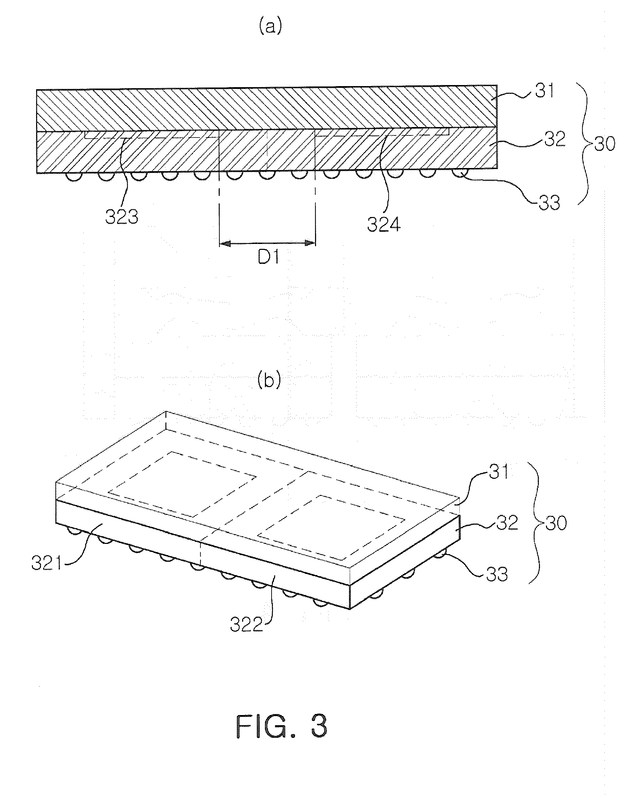

FIG. 1 is a cross-sectional view showing a schematic configuration of a camera module according to a first embodiment of the present invention, FIG. 2 is a perspective view of a lens assembly in the camera module according to the first embodiment of the present invention, and FIG. 3 is a perspective view of an image sensor package in the camera module according to the first embodiment of the present invention.

Referring to FIGS. 1 through 3, the camera module according to the first embodiment of the present invention may include a lens assembly 20 including at least one lens element layer, an image sensor package 30 receiving light incident from the lens assembly, and a housing 10 receiving the lens assembly 20 and the image sensor package 30.

The lens assembly 20 includes a first lens element layer 21 and a second lens element layer 22 sequentially formed from an object side to an image side. The first and second lens element layers 21 and 22 are sequentially stacked along an optical axis. Although the embodiment of the present invention describes and shows that the lens assembly 20 includes two lens element layers, the embodiment of the present invention is not limited thereto. Therefore, the lens assembly may include two or less or two or more lens element layers.

Although the embodiment of the present invention describes and shows that the lens assembly 20 has a structure in which a plurality of lens element layers stacked, the present invention is not limited thereto. The lens assembly 20 may also have a structure in which the plurality of lens element layers are inserted and combined a lens barrel, and the structure of the lens assembly may be variously changed according to design conditions.

A lens may be made of a transparent material to have a spherical surface or a non-spherical surface and may collect and emit light incident from an object to form an optical image. As kinds of the lens, there are a plastic lens and a glass lens. The plastic lens formed by injecting a resin into a mold, pressing and hardening the resin to manufacture a wafer scale lens and then individualizing the lens has a low manufacturing cost and may be mass-produced. Meanwhile, the glass lens is advantageous for implementing high resolution; however, it requires a complicated process and a high cost, and has a difficulty in implementing a lens shape, other than a spherical lens or a planar lens, due to the manufacturing thereof through cutting and grinding glass.

The embodiment of the present invention uses plastic lenses manufactured on a wafer scale. Two plastic lenses having the same focal distance but different optical axes are integrally formed on a single lens element layer.

Specifically, the first lens element layer 21 may include a first lens 211 and a second lens 212, and optical axes of the first lens 211 and the second lens 212 are formed to be spaced apart by a predetermined distance S.

The first lens 211 includes a lens function part 211a and a flange part 211b forming a circumference of the lens function part 211a, and the second lens 212 also includes a lens function part 212a and a flange part 212b.

The lens function parts 211a and 212a may have various shapes, such as a meniscus shape protruded or recessed towards an object side, a meniscus shape protruded or recessed towards an image side, a meniscus shape protruded towards the image side adjacent to the flange part while being recessed towards the image side in the central portion thereof, or the like. In addition, the flange parts 211b and 212b may serve as spacers spacing the lens function parts from each other at the time stacking adjacent lenses.

Similarly, the second lens element layer 22 includes a third lens 221 and a fourth lens 222 that have optical axes formed to be spaced apart by the predetermined distance S, and the third lens 221 and the fourth lens 222 also have lens function parts and flange parts.

When the first lens element layer 21 and the second lens element layer 22 are stacked, the optical axes of the first lens 211 and the third lens 221 coincide with each other and the optical axes of the second lens 212 and the fourth lens 222 coincide with each other.

In the lens assembly according to the embodiment of the present invention, each lens element layer may be manufactured by manufacturing a lens wafer having a plurality of lenses arranged therein and cutting the lens wafer into units of two lenses.

The image sensor package 30 may be a chip scale package (CSP) including an image sensor chip 32 having an image forming region in which light having passed through the lens assembly 20 is formed.

The chip scale package (alternatively, a chip size package), a new package type that has recently been developed and proposed, has more advantages, rather than a typical plastic package. The greatest advantage of the chip scale package is the package size thereof. According to a definition of international semiconductor association such as Joint Electron Device Engineering Council (JEDEC), Electronic Industry Association of Japan (EIAJ), or the like, the chip scale package is generally a classification name for a package having a size about 1.2 times larger than the size of a chip. The chip scale package has mainly been used for products requiring miniaturization and mobility such as a digital camcorder, a mobile phone, a notebook computer, a memory card, or the like. The chip scale package has semiconductor devices mounted therein, such as a digital signal processor (DSP), an application specific integrated circuit (ASIC), a microcontroller, or the like. In addition, the use of the chip scale package in which a memory device, such as a dynamic random access memory (DRAM), a flash memory, or the like, is mounted has been expanded.

The image sensor chip 32 is a device receiving light and converting the received light into an electrical signal. The types of the image sensor chip 32 may be classified into a charge coupled device (CCD) sensor chip and a complementary metal oxide semiconductor (CMOS) sensor chip according to the operation and manufacturing method thereof. The CCD sensor chip, which is based on an analog circuit, uses a scheme of distributing light incident from the lens assembly 20 to several cells so as to allow each cell to store a charge for the light, determining a degree of contrast by using the size of the charge, and then, transmitting the light to a conversion device to represent colors. The CCD sensor chip may allow for a clear image but requires increased data storage capacity and power consumption, such that the CCD sensor chip is mainly used for a high definition digital camera. The CMOS sensor chip is a chip in which an analog signal processing circuit and a digital signal processing circuit are integrated with a semiconductor. The CMOS sensor chip requires only 1/10 of power consumption as compared with the CCD sensor chip. In addition, the CMOS sensor chip is formed such that necessary parts are generally configured in a single chip, thereby allowing for the miniaturization of a product. Due to the recent improvement of technology, the use of the CMOS sensor chip having high definition characteristics in addition to the above advantages has been expanded to several applications, such as a digital camera, a camera phone, a personal media player (PMP), or the like.

Two image sensor chips are disposed in the image sensor package 30 in such a manner so as to correspond to the respective two lenses of each lens element layer. That is, a first image sensor chip 321 and a second image sensor chip 322 are integrally formed in the single image sensor package 30.

The first image sensor chip 321 is disposed so as to correspond to the first lens 211 and the third lens 221, and the second image sensor chip 322 is disposed so as to correspond to the second lens 212 and the fourth lens 222. In this case, a distance D1 between the image sensors of the first and second image sensor chips 321 and 322 may be adjusted according to the distance S between the optical axes of the first and second lenses of the lens assembly 20.

The image sensor package 30 may also be manufactured by cutting an image sensor wafer having a plurality of image sensor chips arranged therein into units of two image sensor chip.

A bottom surface of the image sensor chip 32 is provided with a connection member 33 so as to be connected to a terminal of a main substrate (not shown) on which the camera is mounted.

The connection member 33 may be made of a conductive paste, in particular, a solder paste or a silver-epoxy (Ag-epoxy) resin. In addition, the connection member 33 may have a shape of a solder ball.

A top surface of the image sensor chip 32 may be provided with a cover glass 31. One surface of the cover glass 31 is subjected to IR coating, such that the cover glass 31 may serve as an IR cut-off filter.

The IR cut-off filter may remove an optical signal in an infrared region before the optical signal is inputted to the image sensor through the lens, to allow the image sensor to receive only an optical signal in a visible ray region, to thereby allow an image approximating to a real color.

The cover glass 31 protects the image forming region in which light having passed through the lens assembly 20 of the image sensor chip 32 is formed. For example, the cover glass 31 may prevent foreign objects from being introduced into the image forming region.

The housing 10 includes an inner space and has open top and bottom portions. In detail, the housing may include a receiving part 11 receiving the lens assembly 20 and the image sensor package 30 therein and a capping part 12 formed to be bent from the receiving part 11 so as to cover a portion of the object side of the lens assembly 20.

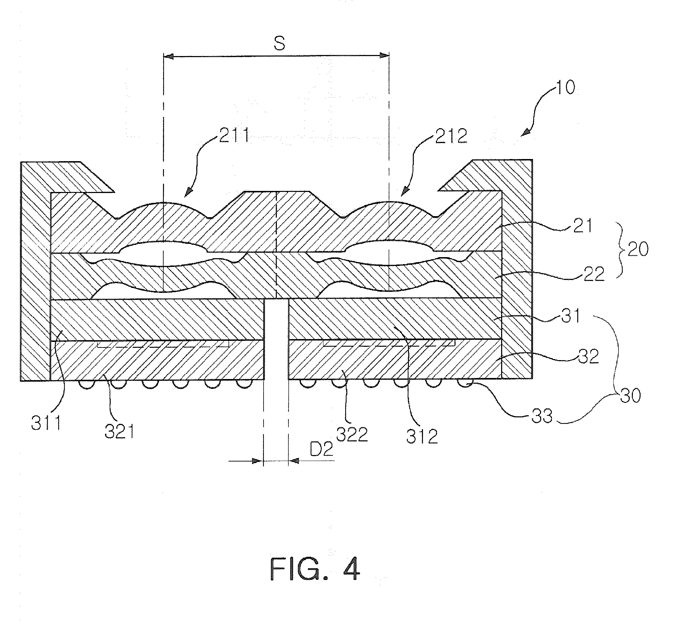

FIG. 4 is a cross-sectional view showing a schematic configuration of a camera module according to a second embodiment of the present invention.

The camera module according to the second embodiment of the present invention shown in FIG. 4 relates to a modified example of the image sensor package and components thereof, other than the image sensor package are the same as those of the camera module according to the first embodiment of the present invention shown in FIGS. 1 to 3. Therefore, the detailed description thereof will be omitted. Hereafter, the difference between the first embodiment of the present invention and the second embodiment of the present invention will be mainly described below.

Referring to FIG. 4, the camera module according to the second embodiment of the present invention may include the lens assembly 20, the image sensor package 30 including the image sensor chip 32 having two image sensor chips, and the housing 10 receiving the lens assembly 20 and the image sensor package 30 therein. The lens assembly 20 has the first and second lens element layers 21 and 22, each including two lenses sequentially stacked along the optical axes thereof.

The image sensor package 30 includes the first and second image sensor chips 321 and 322 corresponding to the respective two lenses of each lens element layer so as to receive light incident through the lens assembly 20. The first and second image sensor chips 321 and 322 are separately manufactured to be disposed by a predetermined distance D2, according to the distance S between the optical axes of the respective lenses.

In this configuration, first and second cover glasses 311 and 312 are disposed on top surfaces of the first and second image sensor chips 321 and 322, respectively, so as to protect the image forming region in which the light having passed through the lens assembly 20 of the image sensor chip 32 is formed.

In addition, bottom surfaces of the first and second image sensor chips 321 and 322 are provided with the connection member 33 so as to be connected to the terminal of the main substrate (not shown) on which the camera module is mounted.

As described above, the configuration of the camera module according to the second embodiment of the present invention is different from that of the camera module according to the first embodiment of the present invention, in that two lenses forming each lens element layer of the lens assembly are integrally formed but the image sensor package is separately manufactured.

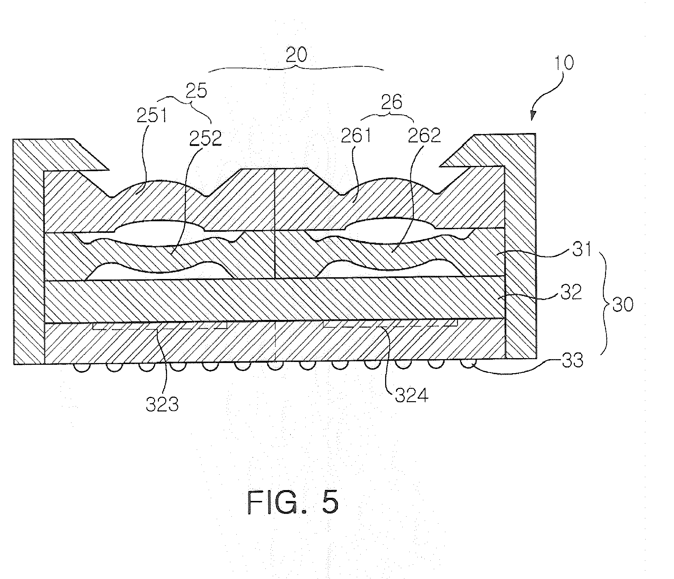

FIG. 5 is a cross-sectional view showing a schematic configuration of a camera module according to a third embodiment of the present invention.

The camera module according to the third embodiment of the present invention shown in FIG. 5 relates to a modified example of the lens assembly, and components other than the lens assembly are the same as those of the camera module according to the first embodiment of the present invention shown in FIGS. 1 to 3. Therefore, the detailed description thereof will be omitted. Hereafter, the difference between the first embodiment of the present invention and the third embodiment of the present invention will be mainly described below.

Referring to FIG. 5, the camera module according to the third embodiment of the present invention may include the lens assembly 20 having at least one lens stacked along the optical axis thereof, the image sensor package 30 receiving light incident through the lens assembly 20, and the housing 10 receiving the lens assembly 20 and the image sensor package 30 therein.

The lens assembly 20 includes a first lens group 25 and a second lens group 26 having the same focal distance and different optical axes. The first lens group 25 includes a fifth lens 251 and a sixth lens 252 stacked along the optical axis thereof from an object side to an image side and the second lens group 26 also includes a seventh lens 261 and an eighth lens 262 stacked along the optical axis thereof from the object side to the image side.

In the image sensor package 30, two image sensor chips corresponding to the respective first and second lens groups 25 and 26 are integrally formed. That is, a first image sensor chip 323 receiving light incident from the first lens group 25 and a second image sensor chip 324 receiving light incident from the second lens group 26 are integrally formed on a single image sensor wafer.

As described above, the configuration of the camera module according to the third embodiment of the present invention is different from that of the camera module according to the first embodiment of the present invention, in that the two image sensor chips configuring the image sensor package are integrally formed but the two lens group corresponding to the two image sensor chips and configuring the lens assembly are separately manufactured.

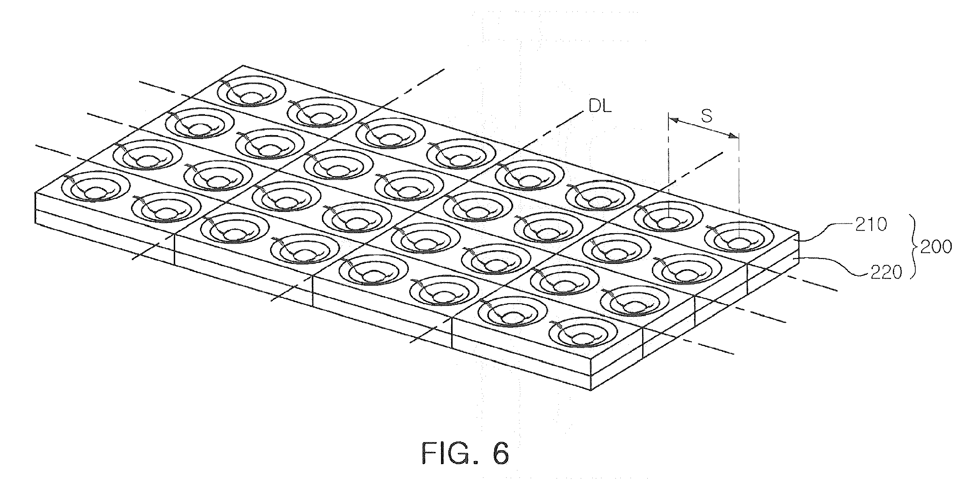

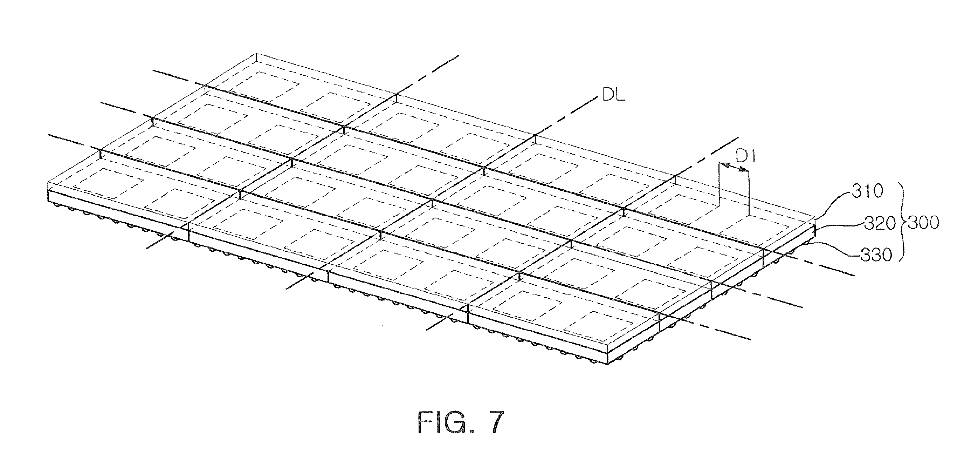

Hereinafter, a method of manufacturing the camera module according to the first embodiment of the present invention will be described with reference to FIGS. 6 and 7.

First, the method of manufacturing the camera module according to the first embodiment of the present invention may be schematically described. At least one lens wafer, including a plurality of lens pairs arranged thereon, is prepared and stacked along the optical axis to be cut into units of lens pairs, that is, units of two lenses, whereby a lens assembly is manufactured. An image sensor package, in which a pair of image sensor chips corresponding to the respective two lenses is disposed, is manufactured. The lens assembly and the image sensor package manufactured as above are inserted into a housing to complete the camera module according to the embodiment of the present invention.

Meanwhile, in manufacturing the lens assembly, the stacking of the at least one lens wafer and the cutting of the lens wafer into units of lens pairs may be performed regardless of the order thereof. That is, after at least one lens wafer is stacked, the stacked lens wafer may be cut into units of lens pairs. Further, after the at least one lens wafer is cut into units of lens pairs, the cut at least one lens wafer may be stacked.

In addition, in the manufacturing of the lens assembly and the manufacturing of the image sensor package, after the lens assembly and the image sensor package are separately manufactured, the manufactured lens assembly and image sensor package may be individually inserted into the housing. Further, after at least one lens wafer and the image sensor wafer having image sensor chips disposed thereon are stacked, the stacked wafers may be cut into units of lens pairs and be inserted in the housing. However, for the convenience of explanation, the method of manufacturing a camera module will be described in the order of stacking the at least one lens wafer, cutting the stacked at least one lens wafer into units of lens pairs, manufacturing the image sensor package corresponding to a pair of lenses, and inserting each of the lens assembly and the image sensor package in the housing.

FIG. 6 is a diagram showing a process of manufacturing the lens assembly in the camera module according to the first embodiment of the present invention and FIG. 7 is a diagram showing a process of manufacturing the image sensor package in the camera module according to the first embodiment of the present invention.

Referring to FIG. 6, a lens wafer 200 on which a plurality of lens pairs are arranged, is prepared, each lens pair having the same focal distance and optical axes to be spaced apart from each other by the predetermined distance S. The lens wafer 200 has a first lens wafer 210 and a second lens wafer 220 stacked along the optical axes from the object side to the image side.

In this case, each of the first and second lens wafer may be manufactured by discharging a resin material into a mold having a shape inverted to the shape of each lens and pressing and curing the resin material.

When the manufactured lens wafer 200 is cut into units of lens pairs along a dicing line DL, the lens assembly 20 shown in FIGS. 1 and 2 is completed.

Referring to FIG. 7, an image sensor wafer 300 on which a plurality of pairs of image sensor chips are arranged, is prepared, each pair of image sensor chips corresponding to a pair of lenses, that is, the two lenses formed on each lens wafer. In this case, the pair of image sensor chips may be formed on the image sensor wafer 300 by adjusting the distance D1 between the image sensors, according to the distance S between the optical axes of the pair of lenses corresponding thereto.

A cover glass wafer 310 may be stacked on a top surface of the image sensor wafer 300 so as to cover the image sensor chips. Meanwhile, according to the embodiment in which two image sensor chips forming the image sensor package are separately manufactured, each of the pair of image sensor chips is spaced apart from each other by the predetermined distance by adjusting the distance D1 between the image sensors of the pair of image sensor chips, to be attached to the cover glass wafer 310, whereby the image sensor wafer 300 may be prepared.

When the prepared image sensor wafer 300 is cut into units of pairs of image sensor chips, the image sensor package 30 shown in FIGS. 1 and 3 are completed.

The camera module according to the first embodiment of the present invention shown in FIG. 1 is completed by inserting and fixing the prepared lens assembly 20 and the image sensor package 30 into the inner space of the housing 10.

Although not shown in the drawings, methods of manufacturing the camera module according to the second and third embodiments of the present invention will be described below. For the convenience of explanation, only components different from those in the method of manufacturing the camera module according to the first embodiment of the present invention will be described.

The configuration of the camera module according the second embodiment of the present invention is different from that of the camera module according to the first embodiment of the present invention, in that two lenses forming each lens element layer of the lens assembly are integrally formed but the image sensor package is separately manufactured. The method of manufacturing the lens assembly is performed by the same method as that of the camera module according to the first embodiment of the present invention.

Meanwhile, in the manufacturing of the image sensor package, two image sensor assemblies, each having the image sensor chip and the cover glass stacked on the top surface of the image sensor chip, are inserted and fixed into the housing to correspond to the respective two lenses of the lens assembly.

In this case, two image sensor assemblies may be disposed between the image sensors to be spaced apart by a predetermined distance according to the distance between the optical axes of two lenses.

As described above, the configuration of the camera module according to the third embodiment of the present invention is different from that of the camera module according to the first embodiment of the present invention, in that two image sensor chips configuring the image sensor package are integrally formed but two lens groups corresponding to the two image sensor chips configuring the lens assembly are separately manufactured. The method of manufacturing the image sensor package is performed by the same method as that of the camera module according to the first embodiment of the present invention.

Meanwhile, in the manufacturing of the lens assembly, two lens groups in which two lenses are stacked along the optical axes are disposed such that the optical axes has a predetermined distance therebetween, and then inserted and fixed into the housing, together with the image sensor package. In this case, the two lens groups have the same focal distance.

Therefore, a 3D camera module for capturing a three-dimensional image may be completed.

As set forth above, the camera module and the method of manufacturing the same can simplify the optical-axis adjustment and the module alignment and can obtain the accurate three-dimensional image by improving the precision of the module alignment, in manufacturing the camera module for capturing the three-dimensional image.

Although the embodiments of the present invention have been described in detail, they are only examples. It will be appreciated by those skilled in the art that various modifications and equivalent other embodiments are possible in the case of the present invention. For example, the order of the method of manufacturing the camera module according to the embodiments of the present invention is merely illustrated, by way of example, and respective steps of the method of manufacturing the camera module may be performed in various orders according to the required conditions. In addition, although the configuration of the camera module according to the embodiment of the present invention only shows and describes essential components, in addition to these components, components for performing additional functions of the camera module, for example, a function of interrupting unnecessary light, an auto-focusing function, or the like, may be added. Accordingly, the actual technical protection scope of the present invention must be determined by the spirit of the appended claims.

## Claims

1. A camera module, comprising:
a lens assembly including at least one lens element layer and two lenses integrally formed on each lens element layer, the two lenses having the same focal distance and different optical axes;
an image sensor package receiving light incident through the lens assembly and having two image sensor chips disposed therein, the two image sensor chips corresponding to the respective two lenses; and
a housing receiving the lens assembly and the image sensor package therein.

2. The camera module of claim 1, wherein the two image sensor chips are integrally formed.

3. The camera module of claim 1, wherein each lens element layer is formed by two lenses adjacent to each other on a lens wafer manufactured at a wafer level.

4. The camera module of claim 1, wherein a distance between image sensors of the two image sensor chips is adjusted according to a distance between optical axes of the two lenses.

5. The camera module of claim 1, wherein the image sensor package includes a cover glass covering the two image sensor chips.

6. A camera module, comprising:
a lens assembly including two lens groups having the same focal distance and different optical axes, each lens group having at least one lens stacked along the optical axis thereof;
an image sensor package receiving light incident through the lens assembly and having two image sensor chips integrally formed therein, the two image sensor chips corresponding to the respective two lens groups; and
a housing receiving the lens assembly and the image sensor package therein.

7. A method of manufacturing a camera module, comprising:
preparing at least one lens wafer on which a plurality of lens pairs are arranged, each lens pair including two lenses having the same focal distance and optical axes spaced apart from each other by a predetermined distance;
stacking the at least one lens wafer along the optical axes;
cutting the at least one lens wafer into units of lens pairs to manufacture a lens assembly;
preparing an image sensor package receiving light incident through the two lenses and having a pair of image sensor chips disposed therein, the pair of image sensor chips corresponding to the respective two lenses; and
inserting the lens assembly and the image sensor package into a housing.

8. The method of claim 7, wherein the preparing of the image sensor package includes manufacturing an image sensor wafer on which the pair of image sensor chips are arranged in plural and cutting the image sensor wafer into a unit of the pair of image sensor chips.

9. The method of claim 7, wherein the preparing of the image sensor package is performed by adjusting a distance between image sensors of the pair of image sensor chips, according to a distance between the optical axes of the lens pair.

10. The method of claim 7, wherein the preparing of the image sensor package includes stacking a cover glass wafer on the pair of image sensor chips so as to cover the pair of image sensor chips.

11. A method of manufacturing a camera module, comprising:
preparing a lens assembly including two lens groups having the same focal distance and different optical axes, each lens group having at least one lens stacked along the optical axis thereof;
preparing an image sensor wafer receiving light incident from the lens assembly and having a plurality of pairs of image sensor chips disposed therein, each pair of the image sensor chips corresponding to the respective two lens groups;
cutting the image sensor wafer into units of pairs of image sensor chips to manufacture an image sensor package; and
inserting the lens assembly and the image sensor package into a housing.
